# EUROPEAN PATENT APPLICATION

(11) **EP 1 650 462 A1**
(43) Date of publication of application: **26.04.2006**
(21) Application number: 05023046.5
(22) Date of filing: 21.10.2005
(51) Int. Cl.: F16D 65/12

(54) **Disc brake rotor**

(30) Priority: 21.10.2004 US 620789 P
(71) Applicant: KELSEY-HAYES COMPANY, Livonia, MI 48150 (US)
(72) Inventor: Gerber, Kraig E., Livonia, Michigan 48154 (US)
(74) Representative: Beyer, Andreas

(57) **Abstract**

A brake rotor (110) adapted for use in a vehicle disc brake assembly includes an inner mounting flange portion and an outer annular disc portion (114) connected thereto by a circumferential hat portion (116). The outer annular disc portion defines an outboard brake surface (122) and an inboard brake surface (124). The outboard brake surface has an inner peripheral surface (122a) and the inboard brake surface has an inner peripheral surface (124a). The inner peripheral surface of the outboard brake surface is connected to the hat portion by a plurality of first ribs (130) and the inner peripheral surface of the inboard brake surface is connected to the hat portion by a plurality of second ribs (132).

## Description

### CROSS REFERENCE TO RELATED APPLICATIONS

This application claims the benefit of U.S. Provisional Application No. 60/620,789, filed October 21, 2004.

### BACKGROUND OF THE INVENTION

This invention relates in general to vehicle disc brake assemblies and in particular to an improved structure for a brake rotor adapted for use in such a vehicle disc brake assembly.

Most vehicles are equipped with a brake system for slowing or stopping movement of the vehicle in a controlled manner. A typical brake system for an automobile or light truck includes a disc brake assembly for each of the front wheels and either a drum brake assembly or a disc brake assembly for each of the rear wheels. The brake assemblies are actuated by hydraulic or pneumatic pressure generated when an operator of the vehicle depresses a brake pedal. The structures of these drum brake assemblies and disc brake assemblies, as well as the actuators therefor, are well known in the art.

A typical disc brake assembly includes a rotor which is secured to the wheel of the vehicle for rotation therewith. A caliper assembly is slidably supported by pins secured to an anchor bracket. The anchor bracket is secured to a non-rotatable component of the vehicle, such as the vehicle frame. The caliper assembly includes a pair of brake shoes which are disposed on opposite sides of the rotor. The brake shoes are operatively connected to one or more hydraulically actuated pistons for movement between a non-braking position, wherein they are spaced apart from opposed axial sides or braking surfaces of the rotor, and a braking position, wherein they are moved into frictional engagement with the opposed braking surfaces of the rotor. When the operator of the vehicle depresses the brake pedal, the piston urges the brake shoes from the non-braking position to the braking position so as to frictionally engage the opposed braking surfaces of the rotor and thereby slow or stop the rotation of the associated wheel of the vehicle.

### SUMMARY OF THE INVENTION

This invention relates to an improved structure for a brake rotor adapted for use in a vehicle disc brake assembly. The brake rotor includes an inner mounting flange portion and an outer annular disc portion connected thereto by a circumferential hat portion. The outer annular disc portion defines an outboard brake surface and an inboard brake surface. The outboard brake surface has an inner peripheral surface and the inboard brake surface has an inner peripheral surface. The inner peripheral surface of the outboard brake surface is connected to the hat portion by a plurality of first ribs and the inner peripheral surface of the inboard brake surface is connected to the hat portion by a plurality of second ribs.

Other advantages of this invention will become apparent to those skilled in the art from the following detailed description of the invention, when read in light of the accompanying drawings.

### BRIEF DESCRIPTION OF THE DRAWINGS

- Fig. 1: is a front perspective view of a first embodiment of a brake rotor constructed in accordance with this invention.
- Fig. 2: is a rear perspective view of the brake rotor illustrated in Fig. 1 in accordance with this invention.
- Fig. 3: is another front perspective view of the brake rotor illustrated in Fig. 1 in accordance with this invention.
- Fig. 4: is another rear perspective view of a portion of the brake rotor illustrated in Fig. 1 in accordance with this invention.
- Fig. 5: is a rear perspective view of a second embodiment of a brake rotor constructed in accordance with this invention.
- Fig. 6: is another rear perspective view of a portion of the brake rotor illustrated in Fig. 5 in accordance with this invention.
- Fig. 7: is a perspective view of a third embodiment of a brake rotor constructed in accordance with this invention.

- Fig. 8: is another perspective view of a portion of the third embodiment of the brake rotor illustrated in Fig. 7 in accordance with this invention.
- Fig. 9: is a perspective view of a fourth embodiment of a brake rotor constructed in accordance with this invention.
- Fig. 10: is a perspective view of a portion of a prior art vehicle disc brake assembly.
- Fig. 11: is an exploded perspective view of selected components of the prior art vehicle disc brake assembly illustrated in Fig. 10.
- Fig. 12: is a sectional elevational view of a portion of the prior art disc brake assembly illustrated in Fig. 10.

### DETAILED DESCRIPTION OF THE INVENTION

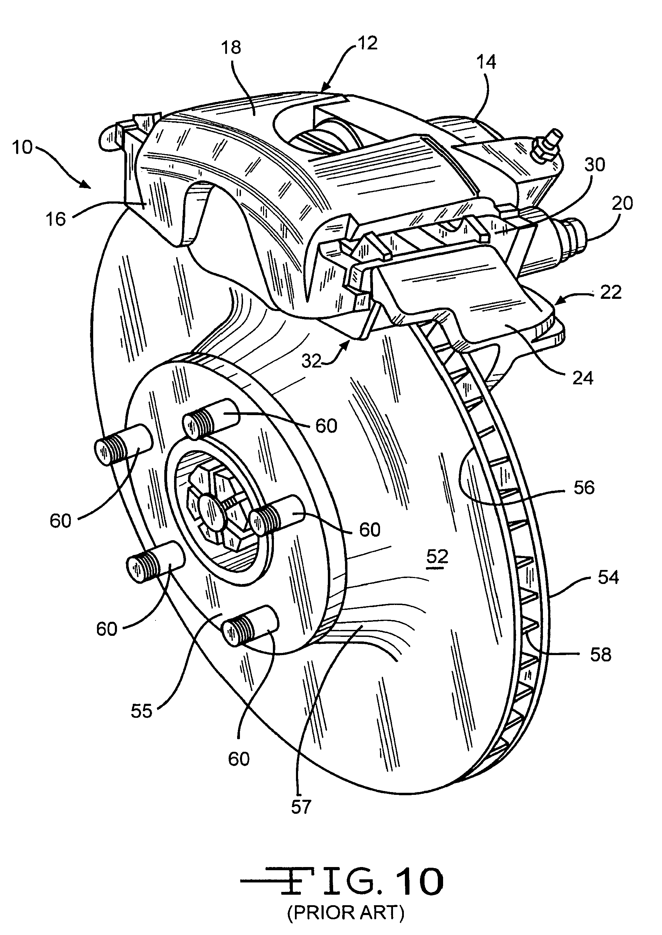

Referring now to the drawings, there is illustrated in prior art Figs. 10 to 12 a portion of a prior art vehicle disc brake assembly, indicated generally at 10. The general structure and operation of the prior art disc brake assembly 10 is conventional in the art. Thus, only those portions of the prior art disc brake assembly 10 which are necessary for a full understanding of this invention will be explained and illustrated. Although this invention will be described and illustrated in connection with the particular kind of vehicle disc brake assembly 10 disclosed herein, it will be appreciated that this invention may be used in connection with other kinds of disc brake assemblies if so desired.

As shown in prior art Fig. 10, the disc brake assembly 10 is a sliding type of disc brake assembly and includes a generally C-shaped caliper, indicated generally at 12. The caliper 12 includes an inboard leg portion 14 and an outboard leg portion 16 which are interconnected by an intermediate bridge portion 18. The caliper 12 is slidably supported on a pair of pins 20 secured to an anchor bracket, indicated generally at 22. The anchor bracket 22 is, in turn, secured to a stationary component of the vehicle. Such a stationary component can be, for example, an axle flange (not shown), when the disc brake assembly 10 is installed for use on the rear of the vehicle, or a steering knuckle (not shown), when the disc brake assembly 10 is installed for use on the front of the vehicle.

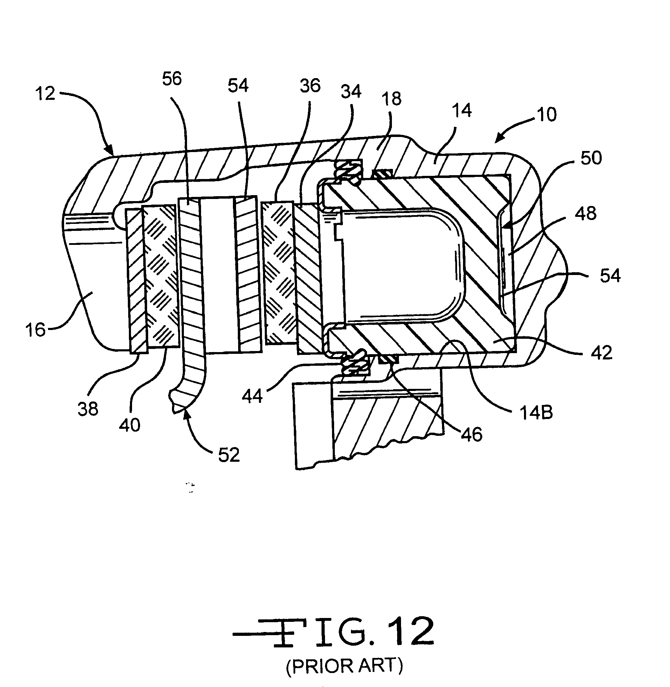

The pins 20 extend through non-threaded apertures 14A formed in the inboard leg 14 of the caliper 12. The pins 20 have respective threaded ends 20A which are received in threaded apertures 22A provided in anchor bracket 22. The pins 20 support the caliper 12 for sliding movement relative to the anchor bracket 22 in both the outboard direction (left when viewing prior art Fig. 12) and the inboard direction (right when viewing prior art Fig. 12). Such sliding movement of the caliper 12 occurs when the disc brake assembly 10 is actuated, as will be explained below. A pair of bolts (not shown) extend through a pair of non-threaded apertures 22B formed in the anchor bracket 22 to secure the anchor bracket 22 to the stationary vehicle component. Alternatively, other known securing methods can be used to secure the anchor bracket 22 to the stationary vehicle component.

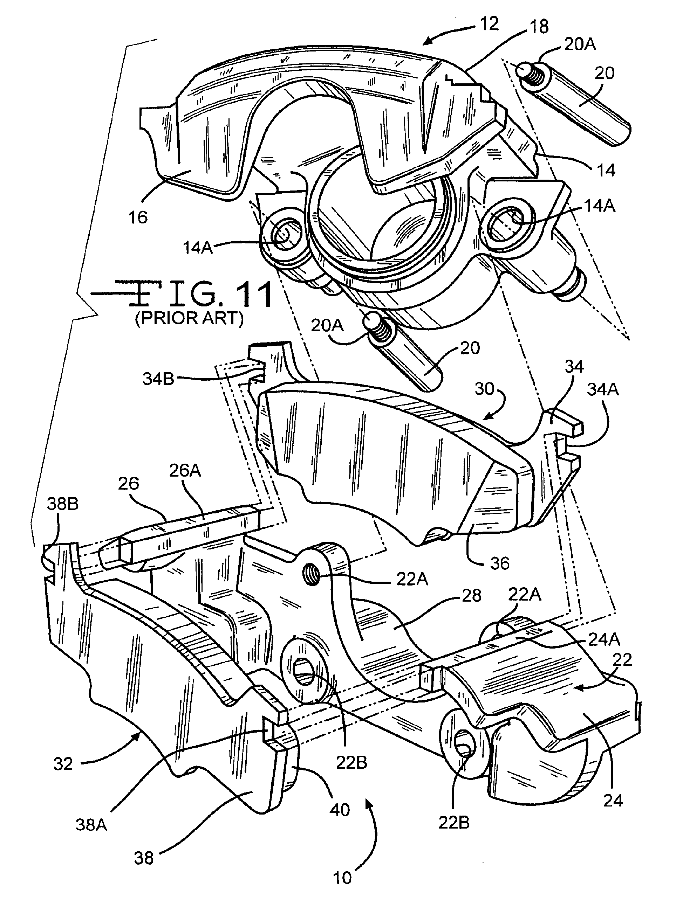

As best shown in prior art Fig. 11, the anchor bracket 22 includes a pair of axially and outwardly extending arms 24 and 26 which are interconnected at their inboard ends by an inner tie bar 28. The arms 24 and 26 have upstanding guide rails 24A and 26A, respectively formed thereon. The guide rails 24A and 26A extend transverse to the arms 24 and 26, respectively, and parallel to one another. The guide rails 24A and 26A slidably support an inboard brake shoe, indicated generally at 30, and an outboard brake shoe, indicated generally at 32, respectively.

The inboard brake shoe 30 includes a backing plate 34 and a friction pad 36. The inboard backing plate 34 includes opposed ends having notches 34A and 34B formed therein, for supporting the inboard brake shoe 30 on the guide rails 24A and 26A of the anchor bracket 22. The outboard brake shoe 32 includes a backing plate 38 and a friction pad 40. The outboard backing plate 38 includes opposed ends having notches 38A and 38B formed therein, for supporting the outboard brake shoe 32 on the guide rails 24A and 26A of the anchor bracket 22. Alternatively, the inboard brake shoe 30 can be supported on a brake piston of the prior art disc brake assembly 10, while the outboard brake shoe 32 can be supported on the outboard leg portion 16 of the caliper 12.

An actuation means, indicated generally at 50 in prior art Fig. 12, is provided for effecting the operation of the disc brake assembly 10. The actuation means 50 includes a brake piston 42 which is disposed in a counterbore or recess 14B formed in the outboard surface of the inboard leg 14 of the caliper 12. The actuation means 50, shown in this embodiment as being a hydraulic actuation means, is operable to move the piston 42 within the recess 14B in the outboard direction (left when viewing prior art Fig. 12). However, other types of actuation means 50, such as for example, electrical, pneumatic, and mechanical types, can be used.

The prior art disc brake assembly 10 also includes a dust boot seal 44 and an annular fluid seal 46. The dust boot seal 44 is formed from a flexible material and has a first end which engages an outboard end of the recess 14B. A second end of the dust boot seal 44 engages an annular groove formed in an outer side wall of the piston 42. A plurality of flexible convolutions are provided in the dust boot seal 44 between the first and second ends thereof. The dust boot seal 44 is provided to prevent water, dirt, and other contaminants from entering into the recess 14B. The fluid seal 46 is disposed in an annular groove formed in a side wall of the recess 14B and engages the outer side wall of the piston 42. The fluid seal 46 is provided to define a sealed hydraulic actuator chamber 48, within which the piston 42 is disposed for sliding movement. Also, the fluid seal 46 is designed to function as a "roll back" seal to retract the piston 42 within the recess 14B (right when viewing prior art Fig. 12) when the brake pedal is released.

The prior art disc brake assembly 10 further includes a brake rotor 52, which is connected to a wheel (not shown) of the vehicle for rotation therewith. The illustrated brake rotor 52 includes a pair of opposed friction discs 54 and 56 which are spaced apart from one another by a plurality of intermediate fins or posts 58 in a known manner to produce a "vented" or "ventilated" brake rotor. The brake rotor 52 extends radially outwardly between the inboard friction pad 36 and the outboard friction pad 40.

When it is desired to actuate the prior art disc brake assembly 10 to retard or stop the rotation of the brake rotor 52 and the vehicle wheel associated therewith, the driver of the vehicle depresses the brake pedal (not shown). In a manner which is well known in the art, the depression of the brake pedal causes pressurized hydraulic fluid to be introduced into the chamber 48. Such pressurized hydraulic fluid urges the piston 42 in the outboard direction (toward the left when viewing prior art Fig. 12) into engagement with the backing plate 34 of the inboard brake shoe 30. As a result, the friction pad 36 of the inboard brake shoe 30 is moved into frictional engagement with the inboard friction disc 54 of the brake rotor 52. At the same time, the caliper 12 slides on the pins 20 in the inboard direction (toward the right when viewing prior art Fig. 12) such that the outboard leg 16 thereof moves the friction pad 40 of the outboard brake shoe 32 into frictional engagement with the outboard friction disc 56 of the brake rotor 52. As a result, the opposed friction discs 54 and 56 of the brake rotor 52 are frictionally engaged by the respective friction pads 36 and 40 to slow or stop relative rotational movement thereof. The structure and operation of the prior art disc brake assembly 10 thus far described is conventional in the art.

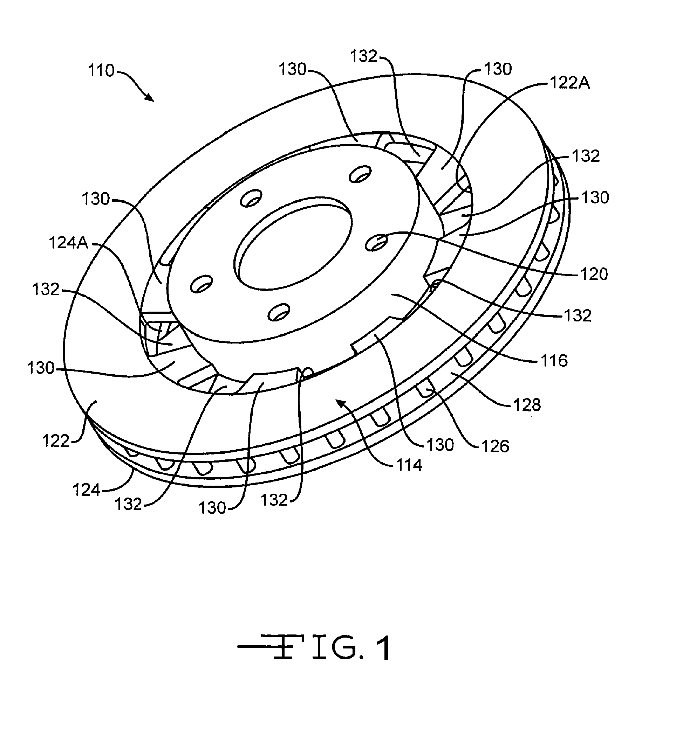

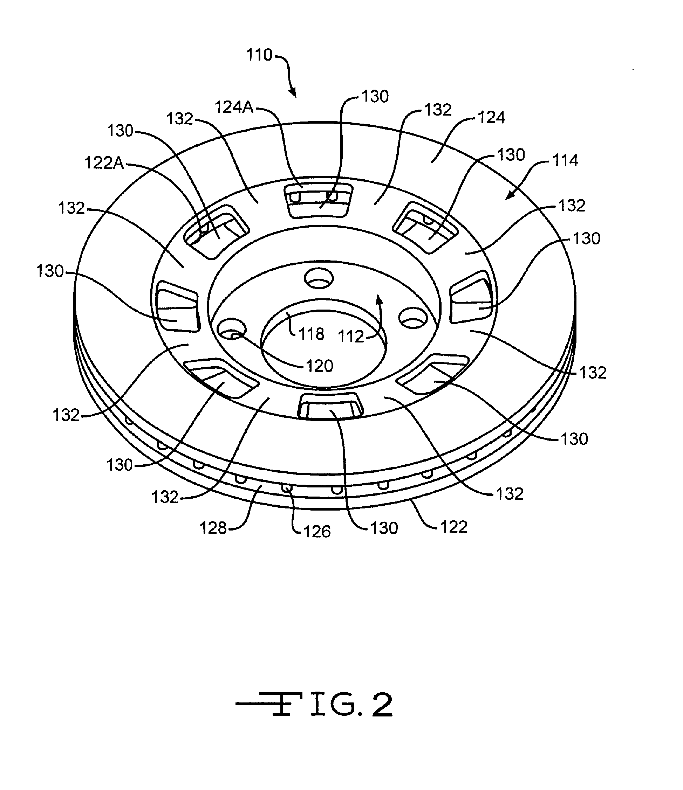

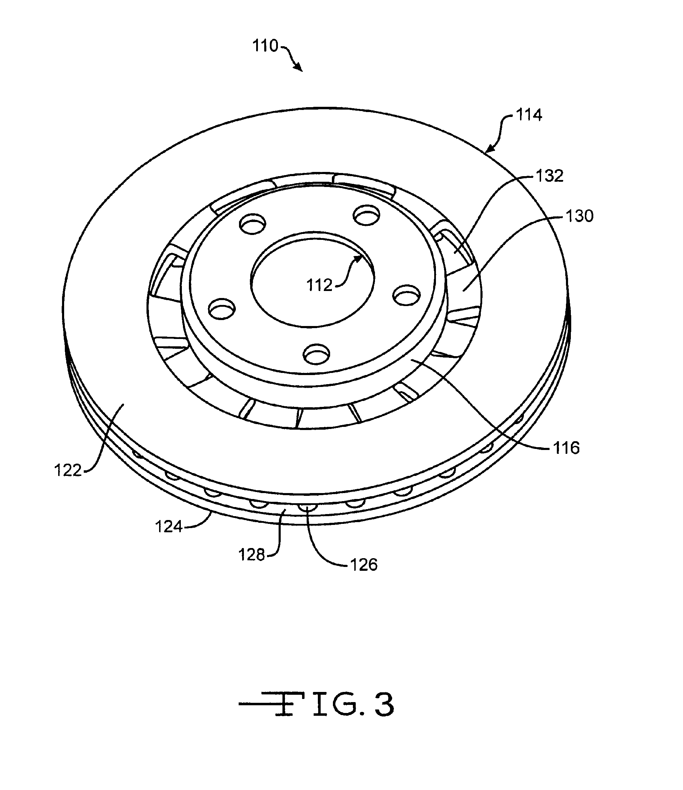

Turning now to Figs. 1 to 4, there is illustrated a first embodiment of a brake rotor, indicated generally at 110, in accordance with this invention. The rotor 110 is preferably a "full cast vented" brake rotor and is formed as a one-piece casting. The rotor 110 is preferably cast from a material which is suitable for a sand casting process or a permanent mold casting process. For example, the rotor 110 can be cast from grey cast iron. Alternatively, the rotor 110 may be formed from other materials and/or cast by other processes. For example, the rotor 110 may be formed from alternative cast iron, composites, aluminum or alloys thereof, and/or cast by a permanent mold casting process, a squeeze casting process, or a high pressure forming/casting process.

The rotor 110 includes an inner mounting flange portion 112 and an outer annular disc portion 114 connected thereto by a circumferential wall or hat portion 116. The inner mounting flange portion 112 is formed having a relatively large pilot hole 118 which is located concentrically about an axis of rotation for the rotor 110. A plurality of lug bolt receiving holes 120 (five of such lug bolt receiving holes 120 being illustrated in embodiment shown in Figs. 1 to 4), are also formed through the inner mounting flange portion 112 of the rotor 110. The lug bolt receiving holes 120 are equally spaced circumferentially about the pilot hole 118. A lug bolt (not shown) extends through each of the lug bolt receiving holes 120 for securing the rotor 110 to a vehicle wheel (not shown) for rotation therewith.

The outer annular disc portion 114 defines an outboard brake surface or plate 122 and an inboard brake surface or plate 124. The outboard brake surface 122 and the inboard brake surface 124 are located in a generally parallel relationship relative to one another. In the embodiment shown, the inboard brake surface 124 and the outboard brake surface 122 are spaced apart from one another by a plurality of fins or vanes 126 so as to form a vented or ventilated type of brake rotor. In the illustrated embodiment, the fins 126 are identical to each other and are evenly spaced around the circumference of the rotor 110. An air passage or cavity 128 is defined in the outer annular disc portion 114 between each successive pair of fins 126. Alternatively, the particular construction of the fins 126 can be other than illustrated if so desired. Also, the rotor could be a non-ventilated type of rotor if so desired.

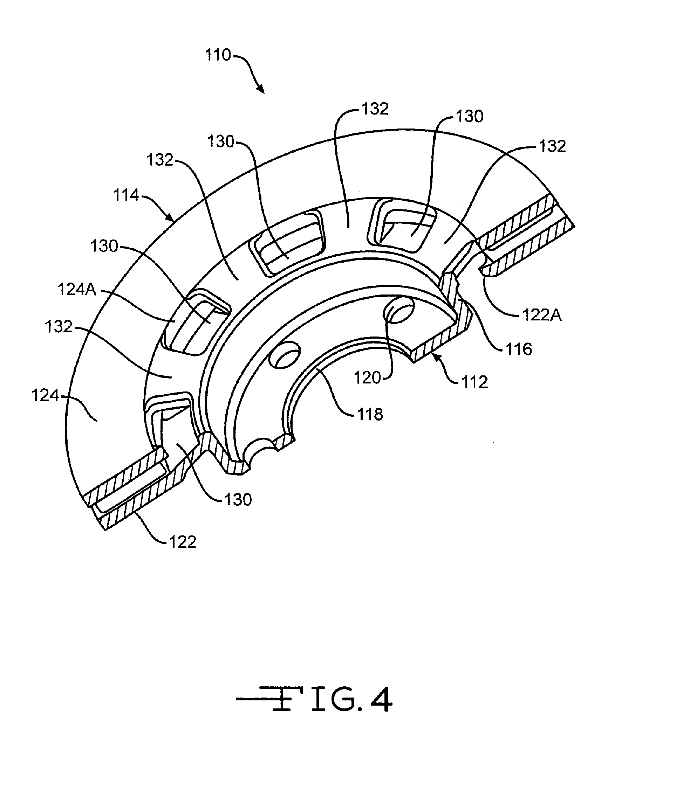

As best shown in Fig. 4, the outboard brake surface 122 includes an inner peripheral edge surface 122A and the inboard brake surface 124 includes an inner peripheral edge surface 124A. The inner peripheral edge surface 122A of the outboard brake surface 122 is connected to the hat portion 116 by a plurality of individual radially extending ribs or connecting members 130. In the illustrated embodiment, each of the ribs 130 is identical to one another and extends at an angle from the hat portion 116 to the inner peripheral edge surface 122A. The angle being dependent upon the particular brake rotor design, and in particular, the particular thickness of the brake rotor.

Similarly, the inner peripheral edge surface 124A of the inboard brake surface 124 is connected to the hat portion 116 by a plurality of individual radially extending ribs or connecting members 132. In the illustrated embodiment, each of the ribs 132 is identical to one another and extends at an angle from the hat portion 116 to the inner peripheral edge surface 124A. The angle being dependent upon the particular brake rotor design, and in particular, the particular thickness of the brake rotor. Preferably, the ribs 130 and 132 are arranged in an alternating manner and are equally spaced circumferentially about the hat portion 114 of the brake rotor 110. Alternatively, the construction of the outer annular disc portion 114 of the brake rotor 110 can be other than illustrated if so desired. For example, the arrangement, spacing, size, quantity, shape and/or configuration of one or more of the fins 126, the air passages 128, the ribs 130 and/or the ribs 132 can be other than illustrated if so desired.

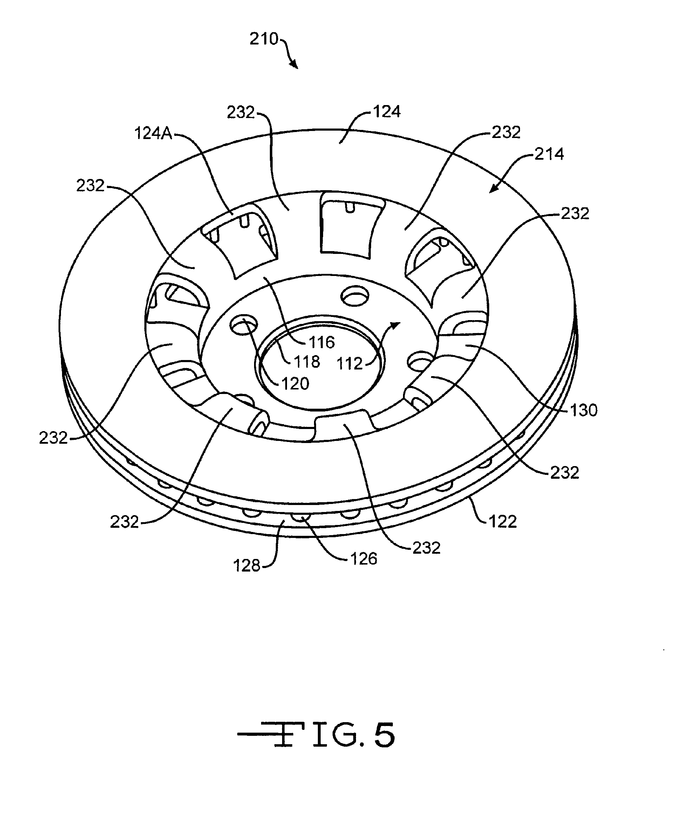

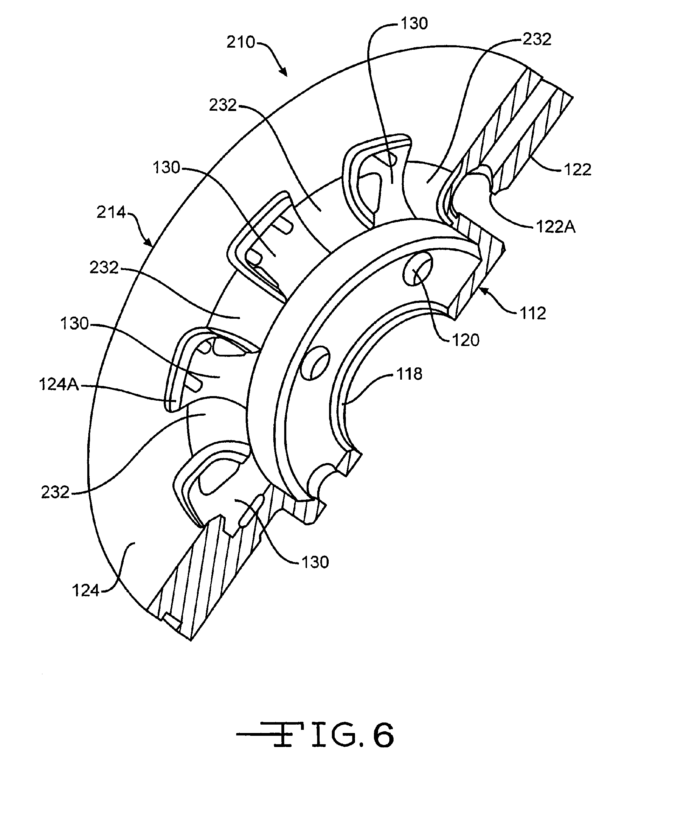

Turning now to Fig. 5 and 6, and using like reference numbers to indicate corresponding parts, there is illustrated a second embodiment of a brake rotor, indicated generally at 210, in accordance with this invention. The rotor 210 is preferably a full cast vented brake rotor and is formed as a one-piece casting. The rotor 210 is preferably cast from a material which is suitable for a sand casting process or a permanent mold casting process. For example, the rotor 210 can be cast from grey cast iron. Alternatively, the rotor 210 may be formed from other materials and/or cast by other processes.

In this embodiment, the inner peripheral edge surface 124A of the inboard brake surface 124 is connected to the hat portion 116 by a plurality of individual ribs 232.

In the illustrated embodiment, each of the ribs 232 is identical to one another and is a generally curved or arc-shaped rib. Alternatively, the construction of the outer annular disc portion 114 of the brake rotor 110 can be other than illustrated if so desired. For example, the arrangement, spacing, size, quantity, shape and/or configuration of one or more of the fins 126, air passages 128, the ribs 130 and/or the ribs 232 can be other than illustrated if so desired. Also, curved ribs could also be used in conjunction with the curved ribs 232 to also connect the outboard brake surface 122 to the hat portion 116 or only the outboard brake surface 122 could have the curved ribs.

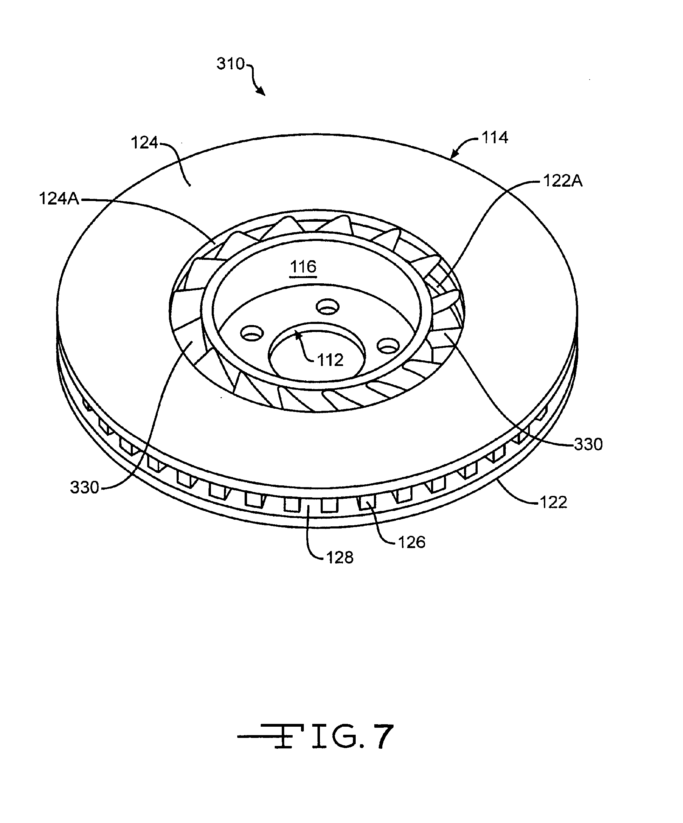

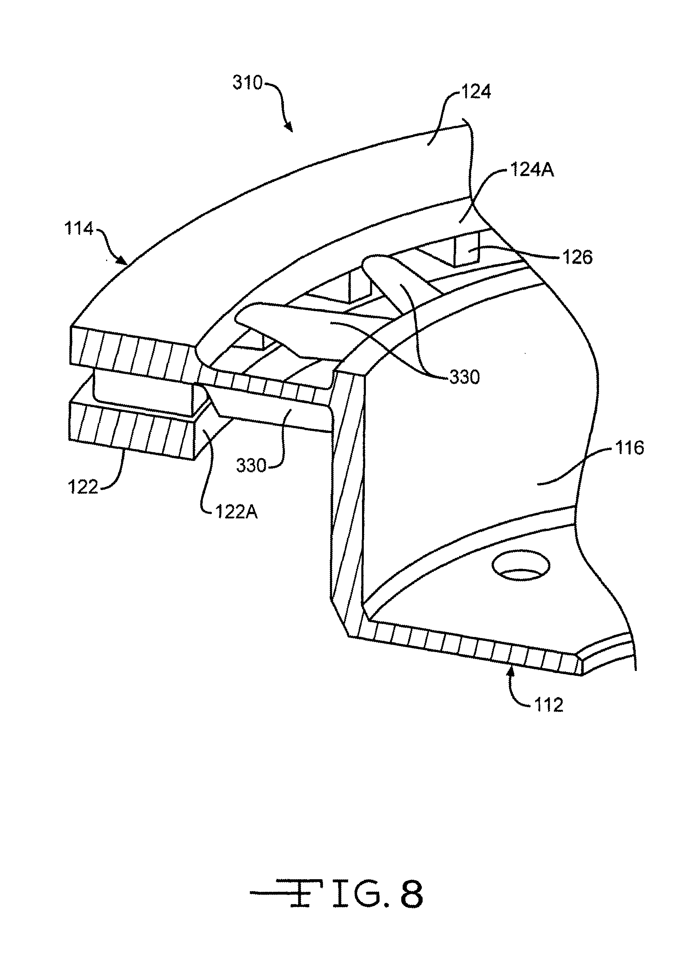

Turning now to Figs. 7 and 8, and using like reference numbers to indicate corresponding parts, there is illustrated a third embodiment of a brake rotor, indicated generally at 310, in accordance with this invention. The rotor 310 is preferably a full cast vented brake rotor and is formed as a one-piece casting. The rotor 310 is preferably cast from a material which is suitable for a sand casting process or a permanent mold casting process. For example, the rotor 310 can be cast from grey cast iron. Alternatively, the rotor 310 may be formed from other materials and/or cast by other processes.

In this embodiment, the inner peripheral edge surface 124A of the inboard brake surface 124 and the inner peripheral edge surface 122A of the outboard brake surface 122 are connected to the hat portion 116 by a plurality of individual single or common "dual connecting" ribs 330. In the illustrated embodiment, each of the ribs 330 is identical to one another and is a generally slanted or angled "thin" rib. The angle being dependent upon the particular brake rotor design, and in particular, the particular thickness of the brake rotor. Alternatively, the construction of the outer annular disc portion 114 of the brake rotor 310 can be other than illustrated if so desired. For example, the arrangement, spacing, size, quantity, shape and/or configuration of one or more of the ribs 330 can be other than illustrated if so desired. Thus, it can be seen in this embodiment that the dual connecting ribs 330 are operative to simultaneously connect together or join both the inboard brake surface 124 and the outboard brake surface 122 to the hat portion 116 of the brake rotor 310.

One believed advantage of each of the brake rotors 110, 210 and 310 of this invention is that it utilizes brake plate attachment points to the hat portion at both the inboard and outboard brake plates which can tend help to stiffen the rotor, improves or reduces coning/thermal distortion and/or improves the machining stability of the part. Other believed advantages and/or features of the brake rotors 110, 210 and 310 of this invention are: 1) the outboard and inboard brake plates have a more similar/uniform heat conduction path to the hat portion (as compared to conventional rotors which only have the fins for the "non-connected" brake plate), 2) having both brake plates connected allows for less stress through the fins because the torsional loading is carried through the ribs or connectors (this can allow for the fins to be thinned if desired, and also can serve as a method for hindering crack propagation), and 3) modifying the number, size, shape, etc. of the ribs or connectors can allow "tenability" of the rotor to address noise, vibration and harshness (NVH) issues.

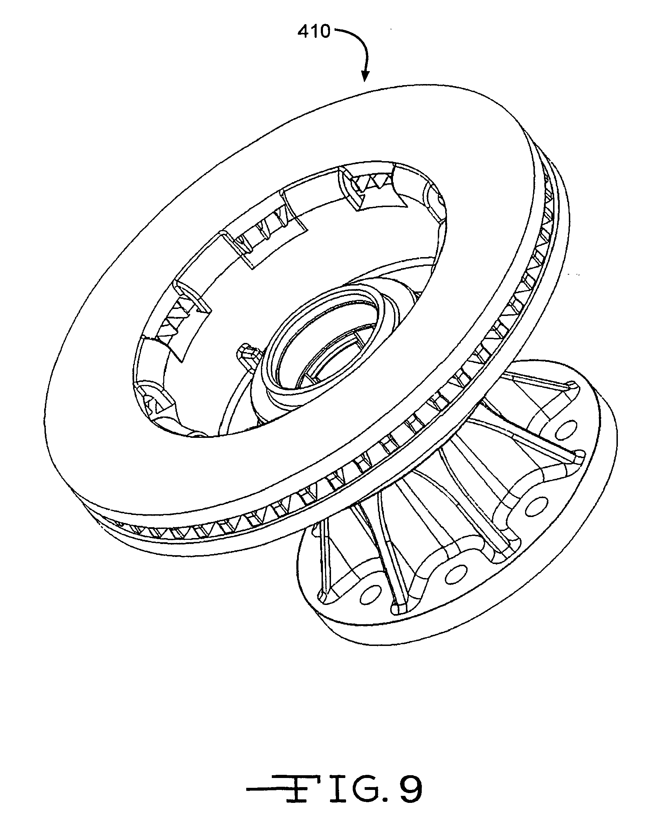

While the rotors 110, 210 and 310 of this invention have been illustrated and described as being a full cast vented rotor, the invention may be used in connection with other types of rotors. For example, the invention may be used in connection with a "uni-cast" rotor, indicated generally at 410 in Fig. 9, wherein the rotor includes an integral hub portion, such as also shown in U.S. Patent No. 5,430,926 to Hartford, the disclosure of which is incorporated by reference in entirety herein; or in connection with a "composite" rotor, such as shown in U.S. Patent No. 5,509,510 to Ihm or U.S. Patent No. 4,930,606 to Sporzynski et al., the disclosures of which are incorporated by reference in entirety herein. Also, the rotors 110, 210 and 310 of this invention can be used in connection with various kinds of disc brake assemblies. For example, the rotors 110, 210 and 310 can be used in connection with the disc brake assemblies shown in U.S. Patent No. 6,386,335 to DiPonio, U.S. Patent No. 6,378,665 to McCormick et al., U.S. Patent No. 5,921,354 to Evans, U.S. Patent No. 5,535,856 to McCormick et al., U.S. Patent No. 5,549,181 to Evans, U.S. Patent No. 5,542,503 to Dunn et al., U.S. Patent No. 5,322,145 to Evans or U.S. Patent No. 5,180,037 to Evans, the disclosures of each of these patents incorporated by reference in entirety herein.

In accordance with the provisions of the patent statutes, the principle and mode of operation of this invention have been described and illustrated in its preferred embodiments. However, it must be understood that this invention may be practiced otherwise than as specifically explained and illustrated without departing from its spirit or scope.

## Claims

1. A brake rotor adapted for use in a disc brake assembly comprising:
a brake rotor including an inner mounting flange portion and an outer annular disc portion connected thereto by a circumferential hat portion, the outer annular disc portion defining an outboard brake surface and an inboard brake surface, the outboard brake surface having an inner peripheral surface and the inboard brake surface having an inner peripheral surface, wherein the inner peripheral surface of the outboard brake surface is connected to the hat portion by a plurality of first ribs and the inner peripheral surface of the inboard brake surface is connected to the hat portion by a plurality of second ribs.

2. The brake rotor defined in Claim 1 wherein the plurality of first ribs are separate from the plurality of second ribs.

3. The brake rotor defined in Claim 1 wherein the plurality of first ribs are interconnected to the plurality of second ribs.

4. The brake rotor defined in Claim 1 wherein the first plurality of ribs and the second plurality of ribs are arranged in an alternating manner about the hat portion.

5. The brake rotor defined in Claim 1 wherein the first plurality of ribs and the second plurality of ribs are arranged in an alternating manner and are equally spaced circumferentially about the hat portion.

6. The brake rotor defined in Claim 1 wherein at least one of the first plurality of ribs and the second plurality of ribs extends at an angle from the hat portion to the inner peripheral surface of the associated inboard and outboard brake surfaces.

7. The brake rotor defined in Claim 1 wherein at least one of the first plurality of ribs and the second plurality of ribs are curved.

8. The brake rotor defined in Claim 1 wherein one of the first plurality of ribs and the second plurality of ribs extends at an angle from the hat portion to the inner peripheral surface of the associated inboard and outboard brake surfaces and the other one of the first plurality of ribs and the second plurality of ribs are curved.

9. The brake rotor defined in Claim 1 wherein the brake rotor is a full cast vented brake rotor and is formed as a one-piece casting.

10. The brake rotor defined in Claim 1 wherein the first plurality of ribs and the second plurality of ribs are identical to each other.

11. The brake rotor defined in Claim 1 wherein the first plurality of ribs and the second plurality of ribs are not identical to each other.

12. The brake rotor defined in Claim 1 wherein the number of the first plurality of ribs and the second plurality of ribs is the same.

13. A disc brake assembly comprising:
a brake rotor;
a brake caliper;
an inboard brake shoe and an outboard brake shoe carried by the disc brake assembly and adapted to be disposed on opposite axial sides of the brake rotor; and
actuation means for selectively moving the brake shoes into frictional engagement with the brake rotor;
wherein the brake rotor includes an inner mounting flange portion and an outer annular disc portion connected thereto by a circumferential hat portion, the outer annular disc portion defining an outboard brake surface and an inboard brake surface, the outboard brake surface having an inner peripheral surface and the inboard brake surface having an inner peripheral surface, wherein the inner peripheral surface of the outboard brake surface is connected to the hat portion by a plurality of first ribs and the inner peripheral surface of the inboard brake surface is connected to the hat portion by a plurality of second ribs

14. The disc brake assembly defined in Claim 13 wherein the plurality of first ribs are separate from the plurality of second ribs.

15. The disc brake assembly defined in Claim 13 wherein the plurality of first ribs are interconnected to the plurality of second ribs.

16. The disc brake assembly defined in Claim 13 wherein the first plurality of ribs and the second plurality of ribs are arranged in an alternating manner about the hat portion.

17. The disc brake assembly defined in Claim 13 wherein the first plurality of ribs and the second plurality of ribs are arranged in an alternating manner and are equally spaced circumferentially about the hat portion.

18. The disc brake assembly defined in Claim 13 wherein at least one of the first plurality of ribs and the second plurality of ribs extends at an angle from the hat portion to the inner peripheral surface of the associated inboard and outboard brake surfaces.

19. The disc brake assembly defined in Claim 13 wherein at least one of the first plurality of ribs and the second plurality of ribs are curved.

20. The disc brake assembly defined in Claim 13 wherein one of the first plurality of ribs and the second plurality of ribs extends at an angle from the hat portion to the inner peripheral surface of the associated inboard and outboard brake surfaces and the other one of the first plurality of ribs and the second plurality of ribs are curved.

21. The disc brake assembly defined in Claim 13 wherein the brake rotor is a full cast vented brake rotor and is formed as a one-piece casting.

22. The disc brake assembly defined in Claim 13wherein the first plurality of ribs and the second plurality of ribs are identical to each other.

23. The disc brake assembly defined in Claim 13 wherein the first plurality of ribs and the second plurality of ribs are not identical to each other.
